(19) **Europäisches Patentamt European Patent Office Office européen des brevets**

(11) **EP 2 243 287 B1**

(12) **FASCICULE DE BREVET EUROPEEN**

(45) Date de publication et mention
de la délivrance du brevet:
**28.12.2011  Bulletin 2011/52**

(21) Numéro de dépôt: **09712199.0**

(22) Date de dépôt: **19.02.2009**

(51) Int Cl.:
***H04N 5/378*** *(2011.01)*        ***H04N 5/3745*** *(2011.01)*
***H04N 5/355*** *(2011.01)*

(86) Numéro de dépôt international:
**PCT/EP2009/051950**

(87) Numéro de publication internationale:
**WO 2009/103751 (27.08.2009 Gazette 2009/35)**

(54) **CAPTEUR DE VISION POUR LA MESURE DES CONTRASTES ET METHODE POUR EFFECTUER UNE TELLE MESURE**

SICHTSENSOR ZUR MESSUNG VON KONTRASTEN UND VERFAHREN ZUR DURCHFÜHRUNG EINER SOLCHEN MESSUNG

VISION SENSOR FOR MEASURING CONTRASTS AND METHOD FOR MAKING SUCH MEASURE

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **22.02.2008  EP 08151781**

(43) Date de publication de la demande:
**27.10.2010  Bulletin 2010/43**

(73) Titulaire: **CSEM Centre Suisse d'Electronique et de Microtechnique SA - Recherche et Développement 2002 Neuchâtel (CH)**

(72) Inventeurs:
• **HEIM, Pascal**
  **CH-2024 Saint-Aubin (CH)**
• **RUEDI, Pierre-François**
  **CH-2068 Hauterive (CH)**

(74) Mandataire: **GLN**
**Rue du Puits-Godet 8a**
**2000 Neuchâtel (CH)**

(56) Documents cités:
**EP-A- 1 301 028     EP-A- 1 858 245**
**GB-A- 2 432 065     US-A1- 2003 107 666**

**Description**

Domaine technique

La présente invention se rapporte aux capteurs de vision réalisés sur un seul chip. Elle concerne, plus particulièrement, un capteur de vision qui, pour chaque pixel, convertit et mémorise numériquement une mesure de l'intensité lumineuse émise par une scène et reçue par le capteur, une telle mesure étant, par la suite, destinée à être utilisée pour le calcul d'un invariant de la scène, tel qu'une valeur de contraste par rapport à des pixels voisins. L'invention concerne également la méthode pour effectuer cette mesure.

Etat de la technique

De tels dispositifs utilisent un concept que l'on appelle « Time-to-Vref », qui consiste à mesurer le temps que met la tension résultant de l'intégration d'un photo-courant sur une capacité pour atteindre un seuil fixé à priori et appelé $V_{ref}$. Cela permet de travailler dans une très grande dynamique d'éclairement lumineux. Dans la plupart des applications, ce seuil est le même pour l'ensemble de l'imageur, mais on peut très bien imaginer qu'il puisse varier d'une région d'intérêt à une autre. Par ailleurs, l'implémentation peut varier d'un exemple à l'autre, en incluant un compteur interne au pixel qui s'arrête lorsque le seuil est atteint ou encore un compteur externe qui mémorisera plus conventionnellement la valeur de la comparaison entre la tension du pixel et la tension de seuil. Un détecteur émet un signal lorsque la comparaison est atteinte. La demande de brevet EP 1 301 028 A1 décrit ainsi un capteur d'image dans lequel chaque pixel est relié à un comparateur connecté à un mot de RAM statique qui mémorise un code Gray fourni par un compteur unique. Un autre exemple d'une technique « Time-to-Vref », appliqué à un capteur d'image peut être trouvé dans le brevet américain US 4,797,562 de Klaus Dietrich, intitulé « Image Recording Sensor ».

Le calcul local du contraste, qu'il s'agisse de son intensité ou de son orientation avait, jusque là, été exécuté à l'aide d'un multiplieur analogique (P.-F. Rüedi et al. : « A 128 x 128 Pixel 120-dB Dynamic-Range Vision-Sensor Chip for Image Contrast and Orientation Extraction », IEEE JSSC, Vol. 38, No 12, December 2003). Dans le document précité, le calcul est effectué analogiquement et, en première approximation, avec une précision indépendante du niveau d'éclairement lumineux de la scène et ce, grâce au mode d'intégration temporel mentionné ci-dessus. Un tel avantage constitue un atout majeur même si la résolution du capteur est moindre.

Un autre avantage tient au fait que l'utilisation directe du contraste dans le traitement des images permet des résultats équivalents à d'autres méthodes plus conventionnelles avec, toutefois, une moindre résolution, mais aussi moins de calculs et moins de stockage de données.

Divulgation de l'invention

Dans le domaine des imageurs standards, la plage dynamique de sensibilité est un des critères de performance les plus importants. Il peut être défini comme le rapport entre la luminance la plus forte et la luminance la plus faible que l'imageur soit capable de mesurer et de restituer de manière acceptable.

Un premier but de l'invention est d'effectuer une prise d'image avec une grande dynamique dans laquelle la réflectance (ou autre paramètre) d'un même objet, éclairé avec une intensité lumineuse quelconque, est quantifiée avec une résolution qui ne dépend pas de ladite intensité lumineuse.

La réflectance est une grandeur qui exprime la capacité des éléments d'une scène à réémettre de la lumière.

Dans la suite de la description, on se focalisera sur la mesure du contraste mais d'autres invariants pourraient s'appliquer.

De façon plus précise, l'invention concerne un capteur de vision numérique qui comporte un réseau de pixels possédant chacun un photo-détecteur et destiné à recevoir un faisceau de lumière représentant une scène visuelle. Pour faciliter la mesure d'au moins un invariant de la scène, dans le sens qu'il ne dépend pas de l'éclairement lumineux de la scène captée, le capteur génère une valeur qui ne dépend de l'éclairement de la scène qu'à une constante près. L'invariant peut alors être calculé, par le capteur ou à l'extérieur du capteur par simple soustraction de ces valeurs. Ces valeurs pouvant être regroupées avant leur soustraction. le capteur selon l'invention comporte :

- un générateur de tension de référence $V_{ref}$,
- des moyens, dans chaque pixel, pour engendrer, pendant une phase d'intégration, une tension $V_p$ proportionnelle à l'éclairement reçu par le pixel,
- dans chaque pixel, un comparateur pour déterminer l'instant auquel la tension $V_p$ dudit pixel atteint la tension $V_{ref}$, ladite tension $V_{ref}$ étant commune à tous les pixels,
- un dispositif de mesure du temps passé depuis le début de chaque intégration,
- des moyens pour quantifier le temps mesuré par ledit dispositif de mesure du temps avec un espacement temporel entre deux valeurs de temps successives qui augmente proportionnellement au temps écoulé depuis le début de l'intégration, la variation dudit espacement constituant une compression logarithmique de l'éclairement,

- un dispositif permettant d'encoder lesdites valeurs de temps successives en un code binaire,
- un mot de mémoire statique RAM par pixel,
- dans chaque pixel, des moyens permettant l'écriture dudit code présent audit instant dans ladite mémoire,
- des moyens pour contrôler la terminaison de la phase d'intégration, et
- des moyens de lecture de l'information stockée en mémoire.

De façon avantageuse, le capteur selon l'invention comprend, en outre, un dispositif permettant d'encoder ladite valeur binaire en un code Gray et lesdits moyens de lecture effectuent le décodage de ces codes Gray en leurs valeurs binaires originales.

Par ailleurs, le capteur comporte des moyens de calcul du contraste à partir des valeurs binaires mémorisées.

Il est entendu que l'éclairement lumineux de chaque pixel est représentatif de la luminance de la partie de la scène projetée sur ce pixel, comme c'est le cas dans tous les capteurs de l'état de la technique. Du fait de la nature logarithmique de la mesure du temps d'intégration, on obtient le logarithme de la luminance par simple changement de signe de cette mesure.

Lorsque l'éclairement lumineux d'une partie de la scène augmente ou diminue de manière uniforme, par exemple lorsqu'un grand nuage passe devant le soleil, la zone constituée par les pixels qui représentent cette partie de la scène sont invariants à l'éclairement lumineux à une constante près. En d'autres termes, le passage du nuage va additionner (ou soustraire) la même valeur à tous les pixels de cette zone. Il en résulte que le contraste qui s'obtient par une soustraction de la valeur d'un pixel de cette zone par un autre pixel de la même zone sera le même avant et après le passage du nuage. Ceci est également vrai si on considère, toujours dans cette même zone, la soustraction de groupes de pixels. On peut additionner la valeur des pixels d'un groupe de pixels et la soustraire à la somme des valeurs d'un autre groupe de pixels de même taille. Le résultat sera également invariant à l'éclairement lumineux. Dans le reste de ce document, lorsqu'on mentionne le fait que la valeur du contraste ne dépend pas de l'éclairement, ou lorsqu'on mentionne que la valeur des pixels ne dépend de l'éclairement qu'à une constante près, il est toujours sous-entendu qu'on se réfère aux parties de la scène, et par extension aux zones de l'image, dont l'éclairement à varié de manière uniforme entre deux prises de vues, c.à.d. dont l'éclairement à été multiplié par un facteur constant dans une même zone. Cette dernière condition ne présuppose pas que l'éclairement soit uniforme dans la zone, c'est uniquement la variation qui doit être uniforme. Il est également possible que cette zone représente l'image dans son entier.

L'invention utilise une méthode qui mesure le temps que met la tension $V_p$ 28 d'un pixel 10, résultant de l'intégration du photo-courant $I_{phd}$ 23 de sa photodiode 22 sur une capacité $C_p$ 25, pour atteindre une tension de référence $V_{ref}$ 31. La mesure de ce temps est quantifiée avec une période variable, qui augmente proportionnellement au temps écoulé depuis le début de l'intégration, de sorte qu'en plus de la propriété susmentionnée, la compresssion logarithmique implicite de la luminance permet le calcul subséquent des données du contraste, qui ne dépend que de la réflectance de la scène éclairée, d'où la dénomination utilisée de capteur de vision pour la mesure de contraste. De plus, du fait de la compression logarithmique, on peut se contenter de moins de bits pour une grande dynamique (10 bits pour 6 décades). Parmi les autres avantages, on peut citer sans ordre: une meilleure robustesse, une plus grande compacité (dû au nombre réduit de bits), une plus grande simplicité des calculs du contraste, une plus grande performance due à l'invariance de l'effet des erreurs d'appariement des composants par rapport à l'éclairement des pixels et une quantification de cet éclairement qui permet un calcul des invariants avec une précision qui ne dépend pas du niveau d'éclairement lumineux de la scène captée. Il est a noter qu'une variation de l'éclairement lumineux de la scène ajoute une même constante à la valeur des pixels de tout le capteur.

Brève description des dessins

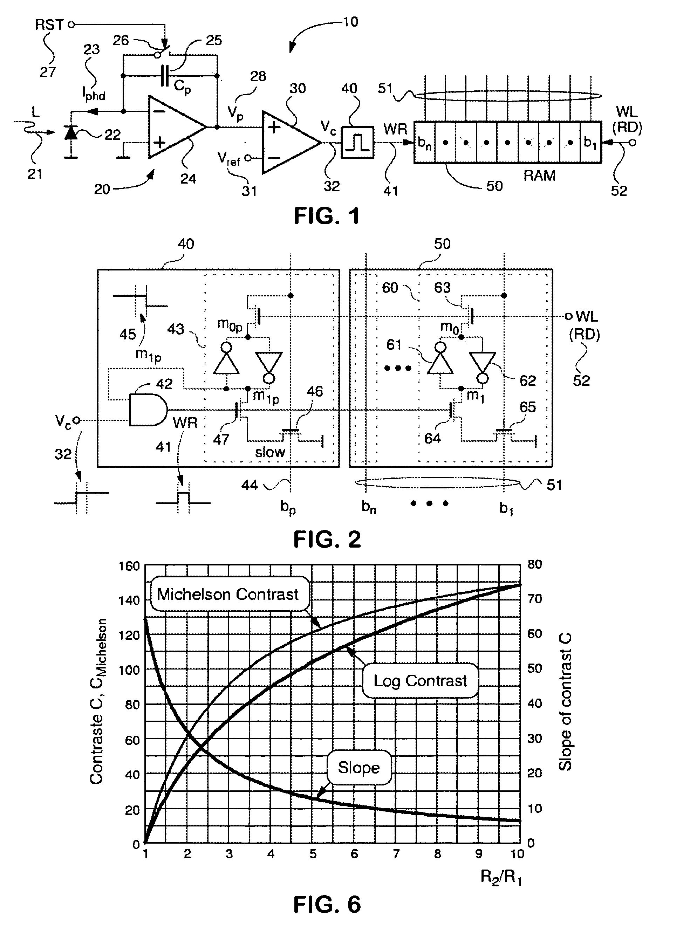

La figure 1 représente le schéma de principe d'un pixel ;
La figure 2 montre l'implémentation de la RAM et du générateur d'impulsion d'écriture ;
La figure 3 représente un diagramme temporel pour l'acquisition d'une image ;
La figure 4 est un schéma de principe ;
La figure 5 montre le principe de l'échantillonnage homothétique ;
La figure 6 présente une comparaison des résultats de l'invention avec la méthode dite « Michelson » pour le calcul du contraste;
La figure 7 représente un exemple d'horloge à temps logarithmique ;
La figure 8 montre une implémentation de l'horloge à temps logarithmique ; et,
**[0023]** La figure 9 illustre la manière d'opérer la présente invention.
Le schéma de la figure 1 ne représente qu'une implémentation possible en technologie de type CMOS, mais il va de soi que d'autres implémentations permettent de résoudre les mêmes fonctions. Un intégrateur 20, dont l'entrée positive est à la masse, est connecté par son autre entrée à une photodiode 22, laquelle engendre un courant $I_{phd}$ 23 lorsqu'elle reçoit une lumière L 21. L'intégrateur 20 utilise un amplificateur à gain élevé 24 (de préférence supérieur à 100). La capacité $C_p$ d'intégration 25, connectée entre l'entrée négative et la sortie de l'amplificateur 24, sert à convertir le photo-courant $I_{phd}$ 23 de la photodiode en une tension $V_p$ 28 selon la relation :

$$V_p = \frac{1}{C_p} \int_t I_{phd} dt \qquad\qquad (1)$$

La capacité d'intégration 25 peut être remise à zéro grâce à l'interrupteur 26, lui-même commandé par un signal de remise à zéro RST 27 délivré par un contrôleur (non représenté) du capteur de vision. La tension $V_p$ 28 est comparée à la tension de référence $V_{ref}$ 31, généralement identique pour toute la matrice, par le comparateur 30 dont la sortie $V_c$ 32 est appliquée au générateur 40 d'une impulsion d'écriture WR 41, elle-même appliquée à une mémoire statique RAM 50. Dans cette implémentation, la tension $V_c$ passe à l'état haut lorsque la tension du pixel $V_p$ atteint la tension de référence $V_{ref}$.

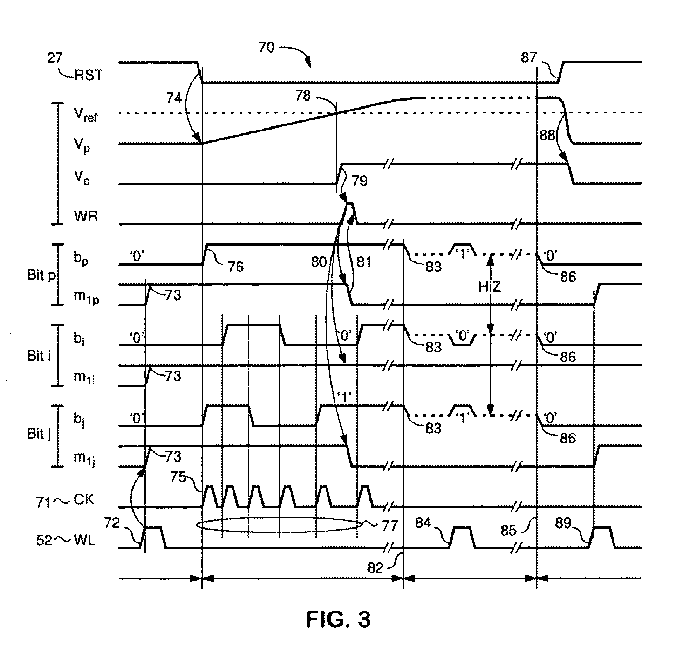

Une implémentation du générateur d'impulsion 40, lequel est actif lorsqu'il est à l'état haut, ainsi que de la mémoire statique RAM 50 qui lui est associée, est décrite en relation avec la figure 2. Un mot mémoire RAM par pixel comprend, par exemple, n bits $b_1$ à $b_n$. Un bus 51, commun à toute une colonne de pixels dans la matrice, est composé de n lignes d'accès, appelées bitlines. La référence 52 désigne un signal WL (pour world line) ou RD (pour read) de lecture de la mémoire statique 50. Ce signal est également utilisé pour remettre à zéro toutes les cellules de mémoire avant toute nouvelle prise d'image, ainsi que cela apparaîtra lors de description de la figure 3.

La figure 2 représente une implémentation de la RAM 50 et du générateur d'impulsion d'écriture 40. Un bit de RAM comprend deux inverseurs CMOS 61 et 62, montés tête-bêche et destinés à servir de bascule (ou« latch ») à la cellule de mémoire 60. Le transistor 63 est le transistor d'accès de la cellule tant en lecture qu'en écriture. L'écriture ne permet que de placer un zéro sur le noeud $m_0$. Pour cela, la bitline bi est maintenue à zéro pendant qu'une impulsion d'écriture à l'état haut est appliquée sur la ligne de contrôle WL 52. Le noeud $m_0$ est alors tiré à la tension basse imposée sur la bitline par le transistor 63. La lecture du noeud $m_0$ après l'acquisition de l'image s'effectue aussi au moyen d'une impulsion à l'état haut sur la ligne de contrôle WL 52. Le transistor 63 applique alors sur la bitline $b_j$ la tension sur le noeud $m_0$ imposée par l'inverseur 61. Le transistor 64 est le transistor d'écriture de la mémoire 60 depuis l'intérieur du pixel 10 (voir figure 1). Après la remise à zéro des mémoires, tous les noeuds $m_1$ sont à l'état haut et tous les noeuds $m_0$ à l'état bas. Les mémoires contiennent donc des zéros. Lorsque le pixel produit une impulsion d'écriture WR 41, la mise en conduction du transistor 64 va conditionnellement tirer le noeud $m_1$ à l'état bas selon l'état présent sur la bitline de la mémoire. Si cette bitline est à l'état bas, le transistor 65, qui est le transistor d'écriture de la mémoire 60, contrôlé par la donnée présente sur la bitline, est bloqué (soit non-conducteur) et le noeud $m_1$ reste à l'état haut (la mémoire conserve son état zéro). Par contre, si la bitline est à l'état haut, la conduction simultanée des transistors 64 et 65 pendant l'impulsion WR 41 va tirer le noeud $m_1$ à l'état bas, ce qui correspond à l'écriture d'un « 1 » dans la mémoire. Le transistor d'écriture 65 de la mémoire 60 est bien contrôlé par la donnée présente sur la bitline.

Le générateur 40 de l'impulsion WR 41 pour l'écriture de la mémoire 50 se compose d'une mémoire 43 et d'une porte logique ET 42. La cellule de mémoire 43 est mise à zéro avant une capture d'image, généralement en même temps que le mot de mémoire 50. Dans cet état, son noeud interne $m_1$, représenté par le signal $m_{1p}$ 45 et la sortie de la porte ET 42 prend le même état que son entrée connectée à la sortie $V_c$ 32 du comparateur 30. Dès le début et pendant toute la capture de l'image, la bitline $b_p$ 44 est maintenue à l'état haut, de sorte à rendre conducteur le transistor 46. Lorsque la sortie $V_c$ 32 du comparateur 30 passe à l'état haut, soit lorsque $V_p$ 28 atteint $V_{ref}$ 31, le signal WR 41 passe à l'état haut, ce qui rend conducteur le transistor 46, puis entraîne le signal $m_{1p}$ vers l'état bas pour, finalement, terminer l'impulsion WR 41 par le blocage de la porte ET 42.

La durée de l'impulsion WR 41 dépend de la vitesse de basculement des deux inverseurs 61 et 62 et du délai de transmission de la porte ET 42. Afin d'assurer que la durée de cette impulsion soit suffisante pour faire basculer toutes les cellules du mot de mémoire 50, la longueur du transistor 46 est supérieure à celle du transistor 65 des cellules du mot de mémoire 50, de manière à ce que le temps de basculement de la cellule 43 soit plus lent que celui des autres cellules dans le pire des cas. Comme indiqué précédemment, l'impulsion d'écriture de la mémoire 50 est active à l'état haut. La cellule de mémoire 43 est utilisée pour engendrer l'impulsion d'écriture WR 41 de la mémoire 50. La bitline $b_p$ 44 est associée à la cellule de mémoire 43. Le signal $m_{1p}$ 45 issu de la mémoire 43 est utilisé, comme indiqué ci-dessus, pour engendrer l'impulsion d'écriture. Le transistor 46, contrôlé par la donnée présente sur la bitline $b_p$ 44, est plus long que son équivalent 65 des cellules du mot de mémoire 50.

La figure 3 montre en 70 un diagramme temporel qui correspond à un cycle complet, quoique simplifié, de l'acquisition d'une image.

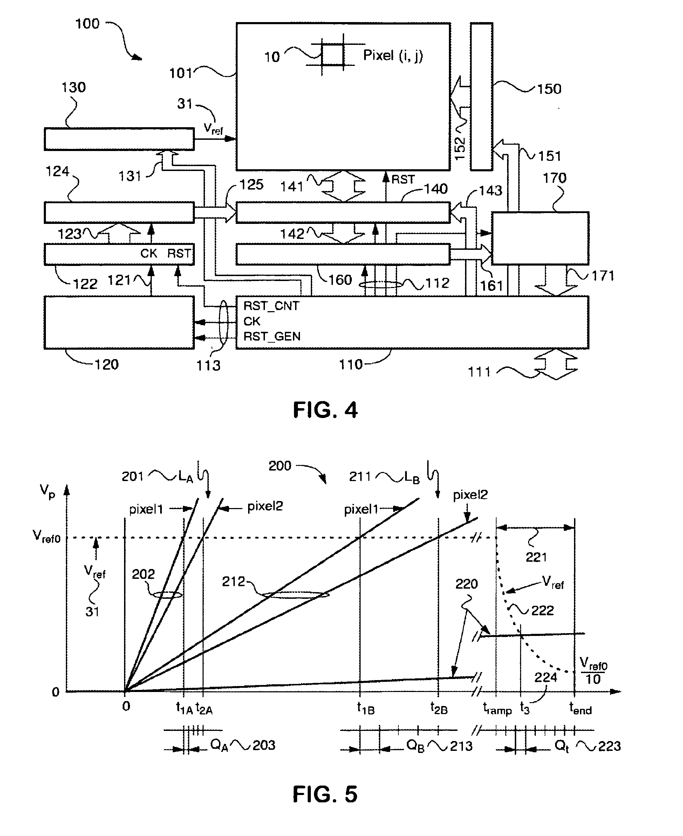

La référence CK 71 représente l'horloge du système, appelée horloge à temps logarithmique car le temps qui sépare deux impulsions successives varie, comme cela sera explicité en relation avec la figure 5, avec le temps écoulé depuis le début du temps d'exposition 75 et donc du début de l'intégration.

Avant le démarrage de l'acquisition d'une image, une impulsion 72 sur le signal WL 52 remet à zéro toutes les cellules de RAM, incluant les cellules du mot de mémoire 50 ainsi que la cellule 43 associée au générateur d'impulsion 40. Cette impulsion sur le signal WL 52 force l'écriture d'un zéro dans toutes les cellules, toutes les bitlines étant préalablement maintenues à l'état bas. La référence 73 montre l'effet de la remise à zéro des cellules de mémoire. Les noeuds $m_0$, non représentés, sont tirés à l'état bas, alors que les noeuds $m_1$ sont tirés au niveau haut.

La référence 74 montre l'ouverture de l'interrupteur 26 pour la remise à zéro RST des pixels, ce qui marque le début de l'intégration 75 des photo-courants 23 sur les capacités d'intégration $C_p$ 25.

La période d'intégration et la génération de l'horloge à temps logarithmique démarrent donc en même temps. En 76, la bitline $b_p$ passe à l'état haut pour permettre l'écriture de la cellule de mémoire 43 lors du basculement du comparateur 30.

La référence 77 désigne les différents instants définis par l'horloge à temps logarithmique. La tension du pixel $V_p$ 28 atteint la tension de référence $V_{ref}$ 31 à l'instant 78. En 79, la sortie $V_c$ 32 du comparateur 30 bascule à l'état haut, suite à l'évènement 78, ce qui provoque le passage à l'état haut du signal d'écriture WR 41 interne au pixel 10. En 80, s'effectue l'écriture à l'état haut des bits de mémoire dont les bitlines sont à l'état haut, tandis que les autres bits sont maintenus à l'état bas. En 81, l'écriture du bit p à l'état haut tire le noeud $m_{1p}$ à l'état bas, ce qui a pour effet de terminer l'impulsion d'écriture WR 41 suite au blocage de la porte ET 42.

La référence 82 correspond à la fin de l'intégration sur laquelle on reviendra en relation avec la figure 5.

La référence 83 désigne le début de la phase de lecture de la mémoire auquel les bitlines 51 et 44 sont mis en mode lecture, c'est-à-dire dans un état à haute impédance HiZ. Suivant l'implémentation des amplificateurs de lecture et le dimensionnement des cellules de mémoire 60, les bitlines 51 et 44 pourront être préchargées à l'état haut. En 84, l'impulsion de lecture est appliquée sur une des wordlines de la matrice (signal WL 52). Les transistors 63 des cellules 60 vont tirer les bitlines correspondantes à l'état haut ou l'état bas selon les tensions aux noeuds $m_0$ de ces cellules. La lecture des bitlines est effectuée par le bloc de lecture/écriture 140 (figure 4) qui contient les amplificateurs de lecture puis, le cycle recommence pour tout ou partie (zone d'intérêt) des lignes de la matrice de pixels 101. La référence 85 désigne la fin de la période de lecture de la matrice. En 86, les bitlines 51 et 44 sont activées à l'état bas en prévision de la phase de remise à zéro des amplificateurs 20 et des cellules de mémoire 60 et 43 des pixels 10.

En 87, les intégrateurs 20 des pixels 10 sont remis à zéro. Suite à cette action, la sortie $V_p$ 28, puis la sortie $V_c$ 32 des intégrateurs, passent à l'état bas en 88.

En 89, ont lieu les impulsions d'écriture de remise à zéro des cellules de mémoire 60 et 43 au moyen du signal de sélection de ligne WL 52. Lorsque ce signal est appliqué à l'état haut, en même temps que les bitlines 51 et 41 sont maintenues à l'état bas à basse impédance, les noeuds $m_0$ des cellules de mémoire 63 et 43 sont forcés à l'état bas, ce qui correspond à un zéro. Il est à noter que la remise à zéro des mémoires par ce moyen doit se faire de manière séquentielle ligne par ligne, car les tampons qui activent les bitlines 51 et 44 ne peuvent pas être raisonnablement dimensionnés pour permettre le basculement de toute une colonne de cellules de mémoire.

La figure 4 est un schéma de principe du capteur de vision 100 pour la mesure des contrastes. Le système décrit ici constitue une version préférentielle mais est susceptible de variantes sans sortir du cadre de l'invention. La matrice 101 comprend N lignes et M colonnes de pixels. Le bloc 110 assure le contrôle du circuit complet. Il dispose d'un circuit d'interface 111 avec l'extérieur, par exemple un microcontrôleur, il gère les signaux de contrôle 112 pour la lecture/écriture de la mémoire 140, des registres de lecture de lignes de pixels 160 et du bloc de calcul des contrastes 170. Enfin, il engendre les signaux de contrôle 113 pour la génération de l'horloge à période exponentielle. Le signal RST_GEN est le signal de remise à zéro du générateur de période logarithmique 120. CK est une horloge de fréquence fixe et RST_CNT est le signal de remise à zéro du compteur de temps 122 pour l'échantillonnage homothétique de la sortie des pixels. L'horloge 121 du générateur 120 sert à incrémenter le compteur de temps 122. Le code binaire 123 à n bits délivré par le compteur 122 est converti, en 124, en un code Gray 125 qui est un code dont un seul bit change à un moment donné. La conversion doit être synchronisée avec la mise à jour du compteur 122 pour éviter des transitions invalides. Cette implémentation n'est pas la seule possible ; elle a cependant été préférée car elle permet de simplifier l'écriture de la mémoire et ainsi de réduire le nombre de transistors dans le pixel. En effet, sans code Gray, il faut inhiber l'écriture de la mémoire pendant le changement de code, ce qui nécessite des moyens supplémentaires dans le pixel. L'emploi de ce code dans une telle conversion analogique-numérique relève de l'état de l'art bien établi. Le code Gray à n bits 125 est distribué, via le bloc de contrôle de lecture/écriture 140, aux bitlines 51 des M colonnes de pixels de la matrice 101. Le convertisseur numérique/analogique 130 engendre la tension de référence $V_{réf}$. Le code numérique 131 fourni par le bloc de contrôle 110 permet d'engendrer cette tension de référence pour la mesure globale du temps d'intégration dans chaque pixel 10. C'est lorsque la tension $V_p$ du pixel atteint la tension de référence que le code Gray 125, présent sur les bitlines 51, est mémorisé dans le mot de mémoire RAM 50 du pixel.

En mode d'écriture, le code Gray est présenté simultanément sur les bitlines 51 des M colonnes de la matrice 101 représentées par le bus de données 141. En mode de lecture, les données de la k$^{ième}$ ligne de pixels, sélectionnée par le bloc de décodage de ligne 150, sont présentées sur le bus de données 141 pour être lues et converties en binaire par le bloc 140 et transférées dans les registres de lecture 160. Le bus 142 est un bus unidirectionnel de même dimension que le bus 141 et permet de transférer les données du bloc 140 de lecture/écriture vers les registres de lecture 160. Les signaux de contrôle du bloc 140 et issus du bloc de contrôle du circuit portent la référence 143. Le décodeur d'adresse de lignes 150 envoie une adresse de ligne 151 de la matrice 101 via le bus de sélection de ligne 152. Les registres tampons 160 contiennent, par exemple, les trois dernières lignes qui ont été lues, ce qui permet au circuit de calcul de contraste 170 d'opérer sur des zones de 3x3 pixels. La référence 161 désigne le bus de transmission de ces zones vers le circuit 170 de calcul des contrastes. La sortie 171 du résultat de ce calcul est finalement appliquée au bloc de contrôle du circuit 110. La méthode de calcul des contrastes sera explicitée plus loin.

La figure 5 montre en 200 l'évolution au cours du temps des tensions $V_p$ de 2 pixels référencés « pixel1 » et « pixel 2». $L_A$ et $L_B$ désignent la luminance éclairant un objet ou plusieurs objets dont $R_1$ et $R_2$ sont les réflectances en deux points de ce ou ces objets, mesurées, respectivement, par les pixels 1 et 2.

La réflectance d'un objet est la proportion R de l'intensité lumineuse incidente réfléchie par l'objet. Elle dépend de la longueur d'onde, mais ne dépend pas de l'intensité de la lumière. Par conséquent, si on éclaire le même objet avec deux intensités lumineuses différentes, avec par exemple $L_A > L_B$, la mesure de l'intensité lumineuse réfléchie par cet objet par la méthode de la mesure du temps d'intégration du photo-courant fournira des temps d'intégration en proportion inverse de l'intensité lumineuse. Pour le pixel n sous la luminance Lx, on aura :

$$t_{nX} = \frac{K_p V_{ref0}}{R_n L_X} \qquad (2)$$

$K_p$ étant un coefficient de proportionnalité dépendant de la construction du pixel, en particulier le rendement quantique de la photodiode et la capacité d'intégration $C_p$, mais aussi de l'optique utilisée.

Sur la figure 5 :

202 représentent les courbes d'intégration des pixels 1 et 2 sous la luminance LA, les temps d'intégration étant respectivement $t_{1A}$ et $t_{2A}$;

212 représentent les courbes d'intégration des pixels 1 et 2 sous la luminance $L_B$. les temps d'intégration étant respectivement $t_{1B}$ et $t_{2B}$.

Selon la relation (2) ci-dessus, les temps d'intégration $t_{1A}$ et $t_{2A}$ sont dans un rapport $L_B/L_A$ avec les temps d'intégration $t_{1B}$ et $t_{2B}$. D'un point de vue géométrique, on a donc une homothétie. Si on veut quantifier l'image d'un objet selon sa réflectance, c'est-à-dire une grandeur qui lui est propre indépendamment de son éclairement lumineux, avec une précision de quantification qui ne dépend pas dudit éclairement lumineux, alors il faut adapter les pas de quantification $Q_i$ dans le même rapport homothétique $L_B/L_A$.

La référence 203 correspond à un pas de quantification $Q_A$ choisi pour mesurer le temps d'intégration lorsque l'éclairement lumineux vaut $L_A$. La référence 213 correspond à un pas de quantification $Q_B$ choisi pour mesurer le temps d'intégration lorsque l'éclairement lumineux vaut $L_B$, avec la même précision de quantification que lorsque l'éclairement lumineux vaut LA, de sorte que :

$$\frac{Q_B}{Q_A} = \frac{t_{1B}}{t_{1A}} \qquad (3)$$

Afin de définir ces pas de quantification, il faut engendrer une horloge qui fixe les instants d'échantillonnage $t_i$. Pour satisfaire la relation (3), il faut que :

$$t_{i+1} = t_i(1+\alpha) \qquad (4)$$

Cette itération peut aussi être formulée sous la forme d'une exponentielle :

$$t_i = t_0(1+\alpha)^i \qquad (5)$$

Avec une telle horloge, on obtient effectivement des pas de quantification proportionnels au temps écoulé dont la valeur est :

$$Q_i = \alpha \cdot t_i \qquad (6)$$

Les instants $t_i$ sont les instants de temps absolu (réels) auxquels on définit une nouvelle période d'indice i de l'horloge, dont la valeur incrémentale linéaire est le logarithme du temps écoulé :

$$i = \log_{1+\alpha} t_i = \frac{\log_{10} t_i}{\log_{10}(1+\alpha)} = K_\alpha \log_{10} t_i \qquad (7)$$

Les valeurs de i sont des entiers qui définissent les périodes successives de l'horloge.
Dans le cas du pixel n sous l'éclairement lumineux Lx décrit par la relation (2), on obtient

$$i_{nX} = K_\alpha \log_{10} \frac{K_p V_{ref0}}{R_n L_X} = K_\alpha \left( \log_{10} \frac{K_p V_{ref0}}{L_X} - \log_{10} R_n \right) \qquad (8)$$

Comme le temps $t_{nX}$ est quelconque, le résultat de (8) est réel et il faut en prendre la valeur entière pour tenir compte de la quantification effectuée par l'échantillonnage temporel.
Comme chaque décade de temps prend dix fois plus de temps, il est souhaitable d'implémenter un moyen de limiter le temps d'intégration tout en convertissant le maximum de pixels qui se trouvent dans les zones les plus noires de la scène, et qui n'ont pas encore franchi le seuil $V_{ref0}$. A cet effet, il est possible de convertir encore une décade d'éclairement lumineux de manière rapide, en diminuant la tension de référence $V_{ref}$ 31 de la manière décrite ci-après.
Toujours sur la figure 5, la courbe 220 correspond à l'intégration d'un pixel recevant très peu de lumière (dans le noir). La référence 221 désigne la période de terminaison de la période d'intégration, définie depuis le temps $t_{ramp}$ à partir duquel la tension de référence $V_{ref}$ 31 commence à décroître, jusqu'au temps tend auquel la tension de référence ne vaut plus que $V_{ref0}$ /10, et qui définit la fin de la période d'intégration. La période de terminaison a été délibérément limitée à une décade, après laquelle tous les pixels restants prennent la dernière valeur correspondant au noir absolu. La référence 222 montre la courbe de décroissance de la tension de référence $V_{ref}$ 31, dont la formulation sera donnée ci-après. La référence 223 correspond à un pas de quantification $Q_t$ (pour terminaison) constant pendant la phase de décroissance 221 pour l'échantillonnage temporel des événements provoqués lors de la décroissance 222 de la tension de référence $V_{ref}$ 31. Enfin, la référence 224 désigne l'instant $t_3$ correspondant au moment de coïncidence entre la tension d'intégration 220 du pixel sombre avec la courbe de décroissance 222 de la tension de référence $V_{ref}$ 31.
A l'instant $t_{ramp}$ correspondant au début de la courbe de décroissance 222, le compteur de temps logarithmique vaut $i = i_{ramp}$. Ce compteur est ensuite incrémenté avec une horloge de fréquence fixe pendant que la tension de référence $V_{ref}$ décroît, de manière à obtenir un échantillonnage identique à celui qu'on aurait obtenu avec le processus antérieur.
En admettant que le temps de la période de terminaison 221 égal à $t_{end}$ -$t_{ramp}$ est négligeable par rapport à la dernière période de l'horloge logarithmique, alors la courbe de décroissance 222 de la tension de référence $V_{ref}$ 31 est simplement donnée par :

$$V_{ref} = 10^{-\frac{i - i_{ramp}}{K_\alpha}} V_{ref0} \qquad (9)$$

Lorsque $i = i_{ramp}$, $V_{ref} = V_{ref0}$. Lorsque $i - i_{ramp} = K_\alpha$, c'est-à-dire égal au nombre de pas de quantification d'une décade, $V_{ref} = 10^{-1} V_{ref0} = 0.1 \cdot V_{ref0}$. Ensuite, lorsque tend est atteint, on réduit brusquement $V_{ref}$ à 0 de sorte à faire basculer tous les pixels restants, auxquels on attribue la dernière valeur de i qui correspond au noir absolu.
La manière de calculer le contraste va maintenant être exposée. Soit un pixel central C et ses voisins de gauche, droite, haut et bas, respectivement dénotés G, D, H et B. En prenant les différences des valeurs échantillonnées par les pixels gauche et droite d'une part, et haut et bas d'autre part, lesdites valeur étant calculées à l'aide de la relation (8), on obtient :

$$\Delta_X = i_G - i_D = K_\alpha (\log_{10} R_D - \log_{10} R_G) = K_\alpha \log_{10}\left(\frac{R_D}{R_G}\right) \equiv C_X \qquad (10)$$

$$\Delta_Y = i_B - i_H = K_\alpha (\log_{10} R_H - \log_{10} R_B) = K_\alpha \log_{10}\left(\frac{R_H}{R_B}\right) \equiv C_Y \qquad (11)$$

Les grandeurs Cx et $C_Y$ correspondent au logarithme du rapport des réflectances, et constituent une mesure du contraste indépendante du niveau d'éclairement lumineux. Les composantes du contraste sont donc obtenues par simple soustraction de 2 nombres. Le calcul de ces différences peut se faire de façon massivement parallèle en implémentant des soustracteurs au bas de chaque colonne de la matrice. La réalisation retenue décrite dans la Figure 4 utilise un circuit de calcul de contraste 170 qui opère sur des zones de $3 \times 3$ pixels qui sont lus séquentiellement du registre tampon de lecture 160.

La valeur numérique de ces composantes de contraste Cx et $C_Y$ est comparée dans la Figure 6 avec une définition plus classique $C_{Michelson}$ de la mesure de contraste donnée par la relation suivante, après normalisation des échelles :

$$C_{Michelson} = 2\frac{R_2 - R_1}{R_2 + R_1} \qquad (12)$$

Comme on peut le constater, le calcul du contraste par soustraction de l'échantillonnage logarithmique de deux réflectances ne diffère pas qualitativement de la mesure de contraste classique décrite par la relation (12).

On notera, sur la figure 6, que la courbe indiquée « slope » représente la pente soit de $C_X$ soit de $C_Y$ et que la courbe « Michelson contrast » a été renormalisée pour pouvoir être comparée à la courbe « Log Contrast ».

D'un point de vue pratique, pour réaliser l'horloge à temps logarithmique à partir d'une horloge de fréquence fixe, la méthode la plus simple consiste à utiliser une table contenant en mémoire tous les instants mesurés par rapport à l'horloge de fréquence fixe, auxquels l'horloge logarithmique doit être incrémentée, puis de générer les impulsions au moyen d'un comparateur numérique. Dans l'exemple qui va suivre, cela représente une mémoire de 1024 mots de 27 bits.

La réalisation préférentielle proposée dans le cadre de cette invention est basée sur une machine d'état qui calcule le prochain instant auquel le compteur de l'horloge logarithmique doit être incrémenté, selon la relation (4). Une table pourrait aussi remplacer la machine d'état.

L'implémentation d'un tel compteur se faisant avec un temps discrétisé, $\alpha t_i$ doit être un multiple de la période du signal d'horloge utilisé. Pour faciliter l'implémentation du coefficient $\alpha$, il est avantageux qu'il soit une puissance de 2. Soit

$$\alpha = 2^{-p} \qquad (13)$$

En comptant en coup d'horloge, l'algorithme devient alors :

$$T_{i+1} = T_i + \max\left[1, \left(partie\_entière\_de(T_i / 2^p)\right)\right] \qquad (14)$$

Au premier coup d'horloge, on ne peut qu'ajouter une période, ce qui correspond à $\alpha = 1$. Au second coup d'horloge, la période ajoutée correspond au 50% du temps déjà écoulé et $\alpha = 0.5$. Ainsi de suite, jusqu'à ce que la résolution relative d'une période devienne plus petite que $2^{-p}$. On obtient donc un compteur de fréquence fixe durant les $2^{p+1}$ premiers coups d'horloge, pour devenir progressivement logarithmique.

L'exemple quantitatif donné ci-dessous est réaliste par rapport à l'état de l'art actuel. La fréquence d'horloge est $f_{ck}$ = 100 MHz, et le paramètre p = 6, ce qui correspond à un accroissement temporel relatif $\alpha$ = 1.56%.

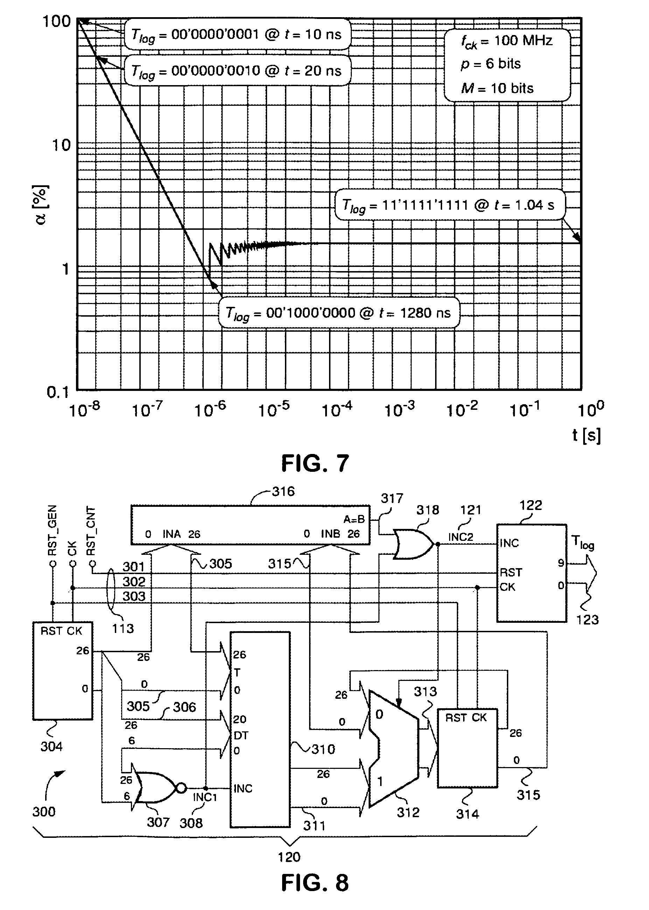

Sur la Figure 7, on a représenté la valeur de $\alpha$ en fonction du temps. La variable $T_{log}$ représente la valeur du compteur logarithmique, qui correspond à l'indice i donné par la relation (8), lorsque ledit compteur est remis à zéro au début de l'intégration (temps t = 0). La résolution par décade est donnée par le nombre d'itérations k tel que $(1+ \alpha)^k$ = 10, c'est-à-dire :

$$k = \frac{1}{\log_{10}(1+\alpha)} = K_{\alpha} \qquad (15)$$

Ce qui, dans le cas de l'exemple choisi, donne une résolution de 149 pas de quantification par décade, à partir du moment où le compteur devient vraiment logarithmique.

Dans le cas où l'on ne veut coder que la partie logarithmique de l'horloge, on peut commencer le comptage à zéro au début de cette zone, ce qui permet d'utiliser toute la capacité du mot de mémoire 50 du pixel. Avec la valeur de $\alpha$ de l'exemple, définissant 149 pas de quantification par décade, on peut couvrir 6,8 décades avec un mot de seulement 10 bits.

Au niveau de la réalisation physique, il est plus avantageux, pour ce qui concerne la surface de circuit, de réaliser l'horloge logarithmique au moyen d'une machine d'état que d'utiliser une méthode plus classique basée sur l'utilisation d'une table programmée en mémoire. Une machine d'état réalisant l'algorithme décrit par la relation (14) et utilisant les valeurs de l'exemple précédent est décrite en relation avec la figure 8.

La machine d'état 300 sert pour la génération de l'horloge à temps logarithmique. Cette machine implémente les blocks 120 et 122 de la Figure 4 dans laquelle :

- Le signal RST_CNT 301 est le signal de remise à zéro du compteur de temps logarithmique. Ce signal de remise à zéro peut être différent du signal de remise à zéro RST_GEN 303 de la machine d'état pour pouvoir commencer l'échantillonnage à un instant arbitraire après le début de l'intégration, par exemple lorsque l'horloge devient effectivement logarithmique.
- La référence 302 désigne l'horloge CK de fréquence constante $f_{ck}$ pour le cadencement de la machine d'état 300.
- La référence 303 désigne le signal RST_GEN de remise à zéro de la machine d'état 300. Ce signal doit être relâché au même moment 74 (voir figure 3) que le signal RST 27 des pixels. Cette action définit l'origine du temps pour l'algorithme décrit par la relation (14) ainsi que le début de l'intégration des photo-courants 23.
- La référence 113 désigne globalement les signaux 301, 302 et 303 qui apparaissent à la figure 4.
- La référence 304 est un compteur incrémenteur de 27 bits avec remise à zéro pour le comptage du temps d'intégration linéaire. Ce compteur est incrémenté à chaque coup d'horloge CK 302.
- La référence 305 désigne le bus de données pour la transmission des 27 bits de sortie du compteur 304 vers le comparateur 316 et l'entrée T (Temps) de l'additionneur 310.
- La référence 306 désigne le bus de données pour la transmission des 27 - 6 = 21 bits de poids forts de la sortie du compteur 304 vers l'entrée DT (Delta-Temps) de l'additionneur 310. Ces 21 bits de poids forts correspondent au terme [partie entière de $(T_i / 2^p)$] de la relation (13), avec p = 6.
- La référence 307 désigne une porte NON-OU à 21 entrées correspondant aux données du bus 306. La sortie INC1 308 de cette porte est à l'état haut tant que les 21 bits de poids forts de la sortie du compteur 304 sont encore à l'état bas.
- La référence 308 constitue la sortie INC1 de la porte NON-OU 307. Cette variable correspond au terme '1' de la fonction max de la relation (13). Ce signal est acheminé vers l'entrée INC de l'additionneur 310 et une des entrées de la porte OU 318.
- La référence 310 désigne un additionneur à 3 entrées qui calcule en permanence l'instant à venir $T_{i+1}$ de la prochaine période du compteur logarithmique. L'entrée T correspond au terme $T_i$ de la relation (13). Les deux entrées DT et INC correspondent à la fonction max de la relation (13), car dès que DT devient plus grand que zéro, la sortie INC1 308 de la porte NON-OU 307 passe à l'état bas (0).
- La référence 311 désigne la sortie de l'additionneur 310 qui correspond à l'instant à venir $T_{i+1}$ de la prochaine période du compteur logarithmique.
- La référence 312 désigne un multiplexeur à deux entrées de 27 bits servant à transférer le prochain instant à venir $T_{i+1}$ dans le registre 314 au moment de l'impulsion INC2 121 qui apparaît à l'instant $T_i$.
- La référence 313 désigne la sortie du multiplexeur 312 appliquée à l'entrée du registre 314 servant à mémoriser le prochain instant à venir $T_{i+1}$ et appliqué à l'entrée INB du comparateur numérique 316.
- La référence 315 désigne la sortie du registre 314 appliquée à l'entrée '0' du multiplexeur 312 et à l'entrée INB du comparateur numérique 316 permettant de détecter l'égalité entre le temps présent appliqué à l'entrée INA et l'instant

à venir $T_{i+1}$ de la prochaine période du compteur logarithmique appliqué à l'entrée INB.
- La référence 317 désigne la sortie du comparateur numérique 316, à l'état haut lorsque les entrées INA et INB sont égales.
- La référence 318 désigne la porte OU permettant de combiner le signal INC1 308 et la sortie A=B du comparateur numérique 316 pour produire le signal d'horloge de temps logarithmique INC2 121.
- Enfin, les références 121 à 123 ont déjà été mentionnées en relation avec la figure 4.

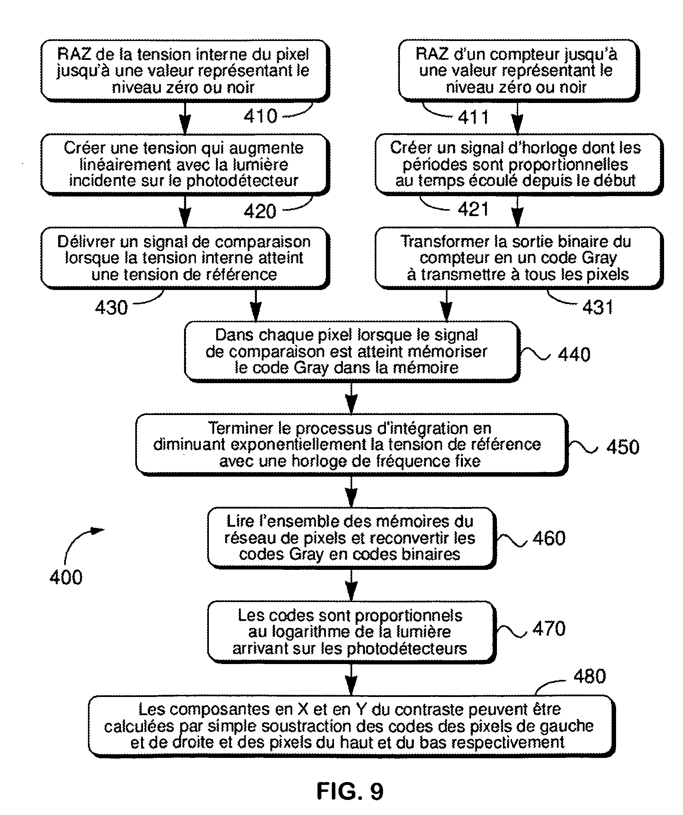

La figure 9 est un diagramme 400 décrivant les phases essentielles de la méthode de mesure du contraste selon l'invention.

En 410, la tension de chaque pixel de la matrice est remise à zéro, représentant le niveau zéro ou niveau de noir. En 420, dans chaque pixel, une tension est intégrée qui varie linéairement avec la lumière incidente sur le photo-détecteur. En 430, un signal de comparaison est émis lorsque la tension intégrée atteint une tension de référence.

En parallèle, en 411, un compteur est mis à une valeur qui représente un niveau zéro ou un niveau de noir. En 421 est produit un signal d'horloge dont les périodes sont proportionnelles au temps écoulé depuis le début de l'intégration. En 431 est fourni un code Gray à partir de la sortie numérique du compteur.

Dans chaque pixel, en 440, le code Gray est stocké dans un mot mémoire sur la base du signal de comparaison. Le processus d'intégration est ensuite terminé, en 450, en réduisant la tension de référence à un taux donné et en échantillonnant à une fréquence fixe convenable (qui peut être la fréquence de base ou moins) ; cette phase de terminaison permet de réduire le temps de conversion de la dernière décade de luminance. En 460, s'effectue la lecture des mémoires de la matrice ainsi que la conversion des codes Gray en codes binaires ; cette opération s'effectue, par exemple, ligne par ligne. En 470, les codes numériques sont proportionnels (voir les relations (7) et (8)) au logarithme de la lumière incidente sur les photo-détecteurs. Enfin, en 480, les composantes en X et en Y du contraste peuvent être calculées par simple soustraction des pixels gauche et droite, et haut et bas, respectivement.

Pour calculer le contraste entre 2 objets de la scène dont les images sont espacées par plus d'un pixel, on peut prendre la somme (ou la valeur moyenne) de la zone de l'image représentant le premier objet, et la soustraire à la somme de la zone de l'image où se situe le second objet. On aura pris soin de prendre des zones comportant le même nombre de pixels pour effectuer la soustraction. Cette méthode permet de calculer de manière aisée le contraste à différentes échelles spatiales.

Bien que la présente invention ait été décrite dans le cadre d'une application particulière, telle le calcul des contrastes d'une scène, il est clair qu'elle est susceptible de modifications ou variantes sans pour autant sortir de son cadre.

**Revendications**

1. Capteur de vision numérique qui comprend un réseau de pixels (10) possédant chacun un photo-détecteur et destiné à recevoir un faisceau de lumière représentant une scène visuelle, comprenant :

    - un générateur de tension de référence $V_{ref}$,
    - dans chaque pixel, des moyens (20) pour engendrer, pendant une phase d'intégration, une tension $V_p$ proportionnelle à l'éclairement reçu par le pixel,
    - dans chaque pixel, un comparateur (30) pour déterminer l'instant auquel la tension $V_p$ dudit pixel atteint la tension $V_{ref}$, commune à tous les pixels,
    - un générateur d'horloge (120), générant une horloge (121),
    - un dispositif de comptage (122) du nombre de périodes de l'horloge (121) écoulées depuis le début de la phase d'intégration, délivrant un résultat sous la forme d'un code binaire (123),
    - un mot de mémoire statique RAM (50) par pixel,
    - dans chaque pixel, des moyens (40) permettant l'écriture dudit code binaire (123) présent audit instant dans ladite mémoire,
    - des moyens (110, 130) pour contrôler la terminaison (221) de la phase d'intégration, et
    - des moyens (140, 150, 160) de lecture de l'information stockée en mémoire,

    **caractérisé en ce que** la période de ladite horloge (121) augmente proportionnellement au temps écoulé depuis le début de l'intégration.

2. Capteur de vision selon la revendication 1, **caractérisé en ce qu'**il comprend, en outre, un dispositif (124) permettant d'encoder ledit code binaire (123) en un code Gray et **en ce que** lesdits moyens de lecture (160) effectuent le décodage desdits codes Gray en leurs valeurs binaires originales.

**3.** Capteur de vision selon l'une des revendications 1 et 2, **caractérisé en ce qu'**il comporte des moyens (170) de calcul du contraste à partir des valeurs binaires mémorisées.

**4.** Capteur de vision selon l'une des revendications 2 et 3, **caractérisé en ce que** les composantes en X et en Y dudit contraste sont calculées par soustraction des valeurs binaires mémorisées dans les voisins de gauche et de droite, respectivement du haut et du bas, desdits pixels.

**5.** Capteur de vision selon la revendication 4, **caractérisé en ce que** deux composantes dudit contraste sont calculées par soustraction des valeurs binaires mémorisées dans les voisins disposés respectivement sur les deux diagonales desdits pixels.

**6.** Capteur de vision selon l'une quelconque des revendications précédentes, **caractérisé en ce que** la phase de terminaison de l'intégration (221) précédant la remise à zéro des pixels s'effectue avec une horloge de fréquence fixe alors que la tension de référence $V_{ref}$ satisfait la relation :

$$V_{ref} = 10^{-\frac{i - i_{ramp}}{K_{\alpha}}} V_{ref\,0}$$

**7.** Méthode pour la mesure du contraste local propre à une scène, qui ne dépend pas de l'éclairement lumineux de ladite scène, au moyen d'un capteur de vision qui comprend un réseau de pixels (10) possédant chacun un photo-détecteur, **caractérisée en ce qu'**elle consiste à :

- déterminer le temps nécessaire à permettre à la tension $V_p$ résultant de l'intégration du courant du photo-détecteur de chaque pixel d'atteindre une tension de référence $V_{ref}$ commune à tous les pixels,
- engendrer un signal d'horloge dont les espacements temporels entre deux valeurs de temps successives sont proportionnels au temps écoulé depuis le début de l'intégration, et compter le temps au moyen dudit signal d'horloge, le code binaire résultant dudit comptage étant proportionnel au logarithme du temps écoulé depuis le début de l'intégration,
- engendrer un code Gray à partir du code numérique binaire représentant lesdites valeurs de temps,
- mémoriser le code Gray lorsque la tension du pixel atteint la tension de référence,
- lors de la lecture des mémoires des pixels, convertir les codes Gray mémorisés en grandeurs numériques binaires, et
- calculer les composantes dudit contraste local de la scène.

**8.** Méthode selon la revendication 7, **caractérisée en ce que** les composantes en X et en Y dudit contraste sont calculées par la différence des codes binaires des voisins de gauche et de droite, respectivement du haut et du bas, de chacun des pixels.

**9.** Méthode selon la revendication 7, **caractérisée en ce que** deux composantes dudit contraste sont calculées par la différence des codes binaires des voisins disposés respectivement sur les deux diagonales de chacun des pixels.

**10.** Méthode selon l'une quelconque des revendications 7 à 9, **caractérisé en ce que** la phase de terminaison de l'intégration précédant la remise à zéro des pixels s'effectue avec une horloge de fréquence fixe alors que la tension de référence $V_{ref}$ satisfait la relation :

$$V_{ref} = 10^{-\frac{i - i_{ramp}}{K_{\alpha}}} V_{ref\,0}$$

**Claims**

**1.** Digital vision sensor which comprises an array of pixels (10) each having a photodetector and intended to receive a light beam representing a visual scene, comprising :

- a reference voltage $V_{ref}$ generator,
- in each pixel, means (20) for generating during an integration phase, a voltage $V_P$ proportional to the illumination received by the pixel,
- in each pixel, a comparator (30) for determining the instant at which the voltage $V_P$ of said pixel reaches the voltage $V_{ref}$, common to all the pixels,
- a clock generator (120) generating a clock (121),
- a device (122) for counting the number of periods of the clock (121) having elapsed since the beginning of the integration phase, delivering a result as a binary code (123),
- one RAM static memory word (50) per pixel,
- in each pixel, means (40) allowing said binary code (123) present at said instant to be written into said memory,
- means (110, 130) for controlling the termination (221) of the integration phase, and
- means (140, 150, 160) for reading the information stored in memory, **characterized in that** the period of said clock (121) proportionally increases with the elapsed time from the beginning of the integration.

2. Vision sensor according to claim 1, **characterized in that** it further comprises a device (124) allowing said binary code (123) to be encoded into a Gray code and **in that** said reading means (160) carry out the decoding of said Gray codes into their original binary values.

3. Vision sensor according to any of claims 1 and 2, **characterized in that** it includes means (170) for computing the contrast from binary values stored in memory.

4. Vision sensor according to any of claims 2 and 3, **characterized in that** the X and Y components of said contrast are computed by subtraction of the binary values stored in the left and right, upper and lower neighbors of said pixels respectively.

5. Vision sensor according to claim 4, **characterized in that** both components of said contrast are calculated by subtracting binary values stored in the neighbors positioned on the two diagonals of said pixels, respectively.

6. Vision sensor according to any of the preceding claims, **characterized in that** the phase for ending the integration (221) preceding the resetting to zero of the pixels, is carried out with a fixed frequency clock while the reference voltage $V_{ref}$ satisfies the relationship:

$$V_{ref} = 10^{-\frac{i\_i_{ramp}}{K_\alpha}} V_{ref0}$$

7. Method for measuring the local contrast specific to a scene, which does not depend on the light illumination of said scene, by means of a vision sensor which comprises an array of pixels (10) each having a photodetector, **characterized in that** it consists of:

- determining the time required for allowing the voltage $V_P$ resulting from the integration of the current from the photodetector of each pixel to reach a reference voltage $V_{ref}$ common to all the pixels,
- generating a clock signal, the time intervals of which between two successive time values are proportional to the time elapsed from the beginning of the integration, and counting the time by means of said clock signal, the binary code resulting from said counting being proportional to the logarithm of the elapsed time from the beginning of the integration,
- generating a Gray code from the binary digital code representing said time values,
- storing the Gray code in memory when the voltage of the pixel reaches the reference voltage,
- upon reading the memories of the pixels, converting the Gray codes stored in memory into binary digital quantities, and
- calculating the components of said local contrast of the scene.

8. Method according to claim 7, **characterized in that** the X and Y components of said contrast are calculated by the difference of the binary codes of the left and right neighbors, of the upper and lower neighbors of each of the pixels respectively.

9. Method according to claim 7, **characterized in that** both components of said contrast are calculated by the difference of the binary codes of the neighbors respectively positioned on both diagonals of each of the pixels.

**10.** Method according to any of claims 7 to 9, **characterized in that** the termination phase of the integration preceding the resetting to zero of the pixels is carried out with a fixed frequency clock while the reference voltage $V_{ref}$ satisfies the relationship:

$$V_{ref} = 10^{-\frac{i\_i_{ramp}}{K_\alpha}} V_{ref0}$$

**Patentansprüche**

**1.** Digitaler Vision Sensor, der ein Pixelnetz (10) umfasst, wobei jedes einen Fotodetektor besitzt und dazu bestimmt ist, ein Lichtbündel zu empfangen, das eine visuelle Szene darstellt, umfassend:

- einen Generator der Referenzspannung $V_{ref}$,
- in jedem Pixel, Mittel (20), um während einer Integrationsphase eine Spannung $V_p$ zu erzeugen, die proportional zu der von dem Pixel empfangenen Lichtintensität ist,
- in jedem Pixel, einen Vergleicher (30), um den Moment zu bestimmen, in dem die Spannung $V_p$ des Pixels die Spannung $V_{ref}$ erreicht, die allen Pixeln gemeinsam ist,
- einen Taktgeber (120), der einen Takt (121) erzeugt,
- eine Zählvorrichtung (122) der Anzahl der seit Beginn der Integrationsperiode vergangenen Perioden des Takts (121), die ein Ergebnis in Form eines binären Codes (123) ausgibt,
- ein statisches RAM-Speicherwort (50) pro Pixel,
- in jedem Pixel Mittel (40), die das Schreiben des in dem Moment vorhandenen binären Codes (123) in den Speicher erlauben,
- Mittel (110, 130) zur Kontrolle der Beendigung (221) der Integrationsphase und
- Lesemittel (140, 150, 160) der im Speicher gespeicherten Information,

**dadurch gekennzeichnet, dass** die Periode des Takts (121) proportional zu der seit dem Beginn der Integration vergangenen Zeit zunimmt.

**2.** Vision Sensor nach Anspruch 1, **dadurch gekennzeichnet, dass** er weiterhin eine Vorrichtung (124) umfasst, die es erlaubt, den binären Code (123) in einen Gray-Code umzucodieren und dass die Lesemittel (160) die Gray-Codes in ihre ursprünglichen binären Werte decodieren.

**3.** Vision Sensor nach einem der Ansprüche 1 und 2, **dadurch gekennzeichnet, dass** er Mittel (170) zur Berechnung des Kontrasts aus den gespeicherten binären Werten aufweist.

**4.** Vision Sensor nach einem der Ansprüche 2 und 3, **dadurch gekennzeichnet, dass** die X- und Y-Komponenten des Kontrasts durch Subtraktion der binären Werte berechnet werden, die in den linken und rechten beziehungsweise oberen und unteren Nachbarn der Pixel gespeichert sind.

**5.** Vision Sensor nach Anspruch 4, **dadurch gekennzeichnet, dass** zwei Komponenten des Kontrasts durch Subtraktion der binären Werte berechnet werden, die in den Nachbarn gespeichert sind, die jeweils auf den zwei Diagonalen der Pixel angeordnet sind.

**6.** Vision Sensor nach einem der vorangehenden Ansprüche, **dadurch gekennzeichnet, dass** die Phase der Beendigung der Integration (221), die dem Rücksetzen der Pixel auf null vorangeht, mit einem stationären Taktgeber durchgeführt wird, während die Referenzspannung $V_{ref}$ der Relation entspricht:

$$V_{ref} = 10^{-\frac{i - i_{ramp}}{K_\alpha}} V_{ref0}$$

**7.** Messmethode des lokalen Kontrasts, der einer Szene entspricht, die nicht von der Lichtintensität der Szene abhängt, mit einem Vision Sensor, der ein Pixelnetz (10) umfasst, wobei jedes einen Fotodetektor besitzt, **dadurch gekenn-**

**zeichnet, dass** sie darin besteht:

- die Zeit zu bestimmen, die notwendig ist, um der Spannung $V_p$ zu erlauben, die aus der Integration des Stroms des Fotodetektors jedes Pixels resultiert, eine Referenzspannung $V_{ref}$ zu erreichen, die allen Pixeln gemeinsam ist,
- ein Taktsignal zu erzeugen, dessen zeitliche Abstände zwischen zwei aufeinanderfolgenden Zeitwerten proportional zu der Zeit sind, die seit dem Beginn der Integration abgelaufen ist, und die Zeit mit dem Taktsignal zu zählen, wobei der binäre Code, der aus der Zählung resultiert, proportional zum Logarithmus der Zeit ist, die seit dem Beginn der Integration abgelaufen ist,
- einen Gray-Code aus dem binären digitalen Code zu erzeugen, der die Zeitwerte repräsentiert,
- den Gray-Code zu speichern, wenn die Spannung des Pixels die Referenzspannung erreicht,
- beim Lesen der Pixelspeicher die gespeicherten Gray-Codes in binäre digitale Größen zu konvertieren und
- die Komponenten des lokalen Kontrasts der Szene zu berechnen.

8.  Methode nach Anspruch 7, **dadurch gekennzeichnet, dass** die X- und Y-Komponenten des Kontrasts durch die Differenz der binären Codes der linken und rechten beziehungsweise oberen und unteren Nachbarn jedes Pixels berechnet werden.

9.  Methode nach Anspruch 7, **dadurch gekennzeichnet, dass** die zwei Komponenten des Kontrasts durch die Differenz der binären Codes der Nachbarn berechnet werden, die jeweils auf den zwei Diagonalen jedes Pixels angeordnet sind.

10. Methode nach einem der Ansprüche 7 bis 9, **dadurch gekennzeichnet, dass** die Phase der Beendigung der Integration, die dem Rücksetzen der Pixel auf null vorangeht, mit einem stationären Taktgeber durchgeführt wird, während die Referenzspannung $V_{ref}$ der Relation entspricht:

$$V_{ref} = 10^{-\frac{i - i_{ramp}}{K_\alpha}} V_{ref\,0}$$

**FIG. 1**

**FIG. 2**

**FIG. 6**

**FIG. 3**

**FIG. 4**

**FIG. 5**

FIG. 7

FIG. 8

RAZ de la tension interne du pixel jusqu'à une valeur représentant le niveau zéro ou noir

410

RAZ d'un compteur jusqu'à une valeur représentant le niveau zéro ou noir

411

Créer une tension qui augmente linéairement avec la lumière incidente sur le photodétecteur

420

Créer un signal d'horloge dont les périodes sont proportionnelles au temps écoulé depuis le début

421

Délivrer un signal de comparaison lorsque la tension interne atteint une tension de référence

430

Transformer la sortie binaire du compteur en un code Gray à transmettre à tous les pixels

431

Dans chaque pixel lorsque le signal de comparaison est atteint mémoriser le code Gray dans la mémoire

440

Terminer le processus d'intégration en diminuant exponentiellement la tension de référence avec une horloge de fréquence fixe

450

400

Lire l'ensemble des mémoires du réseau de pixels et reconvertir les codes Gray en codes binaires

460

Les codes sont proportionnels au logarithme de la lumière arrivant sur les photodétecteurs

470

480

Les composantes en X et en Y du contraste peuvent être calculées par simple soustraction des codes des pixels de gauche et de droite et des pixels du haut et du bas respectivement

## FIG. 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1301028 A1

- US 4797562 A, Klaus Dietrich

**Littérature non-brevet citée dans la description**

- **P.-F. RÜEDI et al.** A 128 x 128 Pixel 120-dB Dynamic-Range Vision-Sensor Chip for Image Contrast and Orientation Extraction. *IEEE JSSC,* Décembre 2003, vol. 38 (12